Europäisches Patentamt

European Patent Office

Office européen des brevets

(11) Veröffentlichungsnummer: **0 504 551 A2**

# EUROPÄISCHE PATENTANMELDUNG

(21) Anmeldenummer: **92101029.4**

(22) Anmeldetag: **22.01.92**

(51) Int. Cl.5: **A62D 3/00, B09B 3/00**

(30) Priorität: **07.02.91 DE 4103719**
**19.04.91 DE 4112893**

(43) Veröffentlichungstag der Anmeldung:
**23.09.92 Patentblatt 92/39**

(84) Benannte Vertragsstaaten:
**BE CH DE FR LI NL**

(71) Anmelder: **PROCUREMENT & PROJECTS GmbH**
**Föhrichstrasse 1**
**W-7000 Stuttgart 30(DE)**
Anmelder: **UWA UMWELTANALYTIK GmbH**
**Gabriel-Max-Strasse 26**
**W-8000 München 90(DE)**

(72) Erfinder: **Döring, Falk, Dr.**
**Föhrichstrasse 1**
**W-7000 Stuttgart 30(DE)**
Erfinder: **Decristoforo, Peter, Dipl.-Chem.**
**Gabriel-Max-Strasse 26**
**W-8000 München 90(DE)**

(74) Vertreter: **von Puttkamer, Nikolaus, Dipl.-Ing.**
**Pienzenauerstrasse 2**
**W-8000 München 80(DE)**

(54) **Verfahren zur Reinigung eines mit einem oder mehreren Stoffen belasteten Erdbodenbereiches.**

(57) Die Erfindung betrifft ein Verfahren zur Reinigung eines mit einem oder mehreren Stoffen (1) belasteten Erdbodenbereiches (2), bei dem in den belasteten Erdbodenbereich (2) ein oder mehrere Mittel (3) eingebracht werden, welche den oder die Stoffe (1) in eine oder mehrere mit Wasser elektroosmotisch transportierbare Formen (4) überführen, und die eine oder mehreren transportierbaren Formen (4) im Erdbodenbereich (2) zusammen mit Wasser elektroosmotisch zu einem vorher definierten Bereich (7) transportiert werden, wo sie aus dem Erdbodenbereich (2) entfernbar sind.

Fig.1

EP 0 504 551 A2

Bei einem bekannten Verfahren zur Reinigung eines mit einem Schadstoff belasteten Erdbodenbereiches werden in den Erdbodenbereich Rohre mit einem Durchmesser von bis zu zwei Meter eingerüttelt, in denen dann der Bodenbereich mittels Injektionslanzen und einer durch diese Lanzen unter hohem Druck eingepreßten Waschlösung der Boden in-situ gewaschen wird. Die Rohre werden so eingerüttelt, daß ihre Schnittspuren einander überschneiden. Dieses Verfahren verursacht hohe Kosten.

Aus der DE-OS 36 00 772 ist ein Verfahren zur Reinigung eines mit wasserunlöslichen chlorierten Kohlenwasserstoffen belasteten Erdbodenbereiches bekannt, bei dem durch den leitfähigen Erdbodenbereich vorhandene Bodenbakterien stimuliert werden, welche die chlorierten Kohlenwasserstoffe angreifen und chemisch aufschließen.

Zur Dekontaminierung eines mit mittel- und höhersiedenden Kohlenwasserstoffen, wie beispielsweise Mineralölprodukte, Phenole, Benzole, Xylole, Toluole, Teer, Asphalt, Aminoverbindungen chlorierte, fluorierte, nitrierte, bromierte Kohlenwasserstoffe uws., aber auch mit Schwermetallen und anderen Schadstoffen, z.B. mit Cyaniden und Arsen belasteten Erdbodenbereiches, ist es bisher üblich, den Erdbodenbereich auszuheben. Für die Behandlung des ausgehobenen Bodens stehen mehrere Verfahren zur Verfügung:

Eine Methode besteht darin, den Bodenaushub insgesamt in einem gesicherten Einschluß auf einer Deponie zu verwahren, d.h. der verseuchte Erdboden wird nicht gereinigt, sondern lediglich an einen anderen Ort verlagert. Dazu sind wertvolle Sondermülldeponien erforderlich, die dann anderweitig nicht mehr zur Verfügung stehen. Überdies verursacht diese Methode hohe Kosten.

Bei einem anderen Verfahren wird der ausgehobene Erdbodenbereich thermisch gereinigt, wobei in speziellen Sonderanlagen die Schadstoffe im Boden bei hohen Temperaturen ausgegast und/oder verbrannt werden. Die Verbrennung verursacht hohe Kosten. Außerdem ist eine aufwendige Abgasreinigung bei den Verbrennungsanlagen erforderlich und überdies besteht der Nachteil der sogenannten Verklinkerung des Bodens.

Bei einem weiteren Verfahren wird der ausgehobene Boden außerhalb der Baugrube mit waschaktiven Substanzen in speziellen Wascheinrichtungen gewaschen. Auch dieses Verfahren verursacht hohe Kosten und außerdem besteht das Problem, daß die Abwässer behandelt werden müssen.

Es ist auch bekannt, den ausgehobenen Erdbodenbereich auf gesicherte Mieten zu schütten und die Schadstoffe kontrolliert durch Mikroorganismen abzubauen. Dieses Verfahren erfordert Platzbedarf und Arbeitsaufwand. Überdies entziehen sich Schadstoffe, wie Phenol, Benzol, Mercaptane, Anilin, Bencidine, verschieden polycyclische Aromaten (PAH), aber auch z.B. Cyanverbindungen usf. einer mikrobiologischen Reinigung, wenn bestimmte Grenzkonzentrationen überschritten werden, da diese Schadstoffe zum Teil hoch toxisch sind und somit biocid wirken. Ähnliches gilt für Mikrokontaminationen mit Schwermetallen, während Schwermetallverbindungen meist kaum mikrobiologisch abbaubar sind.

Allen vorgenannten Verfahren ist gemeinsam, daß sie je nach bodenkundlichen respektive geologischen Verhältnissen nur Schadstoffherde erfassen können, die in relativ geringen Tiefen unterhalb der Geländeoberkante liegen. Bei den Verfahren, bei denen der Erdboden ausgehoben wird, sind bei Anschnitt des Grundwasserleiters umfangreiche und kostenintensive Wasserhaltungsmaßnahmen, beispielsweise eine Grundwasserabsenkung, mit allen negativen Begleiterscheinigungen erforderlich.

Überdies können die vorgenannten Verfahren in bebauten Geländen nur dann angewandt werden, wenn vorher die Bauwerke abgebrochen werden.

Der in Anspruch 1 angegebenen Erfindung liegt ein Verfahren zugrunde, durch das ein bzw. mehrere einen Erdbodenbereich belastende Stoffe in einer einfachen effektiven und wirtschaftlichen Weise aus dem Erdbodenbereich entfernen zu können.

Die mit der Erfindung erzieltbaren Vorteile bestehen insbesondere darin, daß es durch sie kostengünstig möglich ist, sowohl in-situ wie auch in Anwendungen außerhalb einer Baustelle, im unbebauten Gelände als auch im verbauten Gelände ohne schwerwiegende Eingriffe in die Bausubstanz und/oder dessen Untergrund und in beliebigen Tiefen, auch in Grundwasserbereichen Stoffe, insbesondere Schadstoffe wie Kohlenwasserstoffe, Schwermetalle und andere Schadstoffe, wie z.B. Cyanide oder Arsen, gezielt zu mobilisieren und aus dem Erdbodenbereich auszutragen. Die Reinigung erfolgt mittels elektrochemischer Bodenwäsche.

Ein besonderer Vorteil des erfindungsgemäßen Verfahrens besteht hinsichtlich der sogenannten Mischkontamination, bei denen unterschiedlich Schadstoffe mit unterschiedlichem physikalisch-chemischem Verhalten gemeinsam auftreten. Alle vorgenannten bekannten Verfahren könen dieses Problem der in der Sanierungspraxis häufig auftretenden Mischkontaminationen nicht oder nur in beschränktem Umfang lösen. Mit dem erfindungsgemäßen Verfahren läßt sich dieses Problem kostengünstig und auf sehr einfache Weise durch die im Anspruch 35 angegebenen Merkmale lösen. Dabei kann je nach chemisch-physikalischer Eigenschaft ein einziges chemisches Mittel bzw. eine Kombination verschiedener chemischer, ähnlich wirkender Verbindungen genügen, um die Schadstoffe entweder für den Transport mittels Wasser zu erschließen und/oder in eine wasserlösliche Form zu überführen. Im Extremfall sind mehrere unterschiedlich wirkende chemische Mittel bzw. Mischungen erforderlich. Die Vorteile des erfindungsgemäßen Verfahrens werden dadurch nicht oder nur in unerheblichem Maße beeinträchtigt.

Zum Einsatz gelangen vorzugsweise drei Stoffgruppen, die als Sammelbegriffe gebraucht werden:

- Tenside, die auch waschaktive Substanzen genannt werden,
- Enzyme, die als eigentlicher Wirkbestandteil der Mikroorganismen für den Ab- oder Umbau von organischen Substanzen dienen,
- Chelatbildner, die anorganische, wasserunlösliche Substanzen wie Härtebildner und Schwermetallverbindungen in eine wasserlösliche oder wassertransportierbare Form überführen.

Von daher gesehen, können durch den Einsatz von chemischen Verbindungen je nach Art der Schadstoffe unterschiedliche Mobilisierungsstrategien verfolgt werden:

Strategie 1: Mobilisierung von stark haftenden Schadstoffen. Eingesetzt werden Tenside, welche die Oberflächenspannung von Schadstoffen in wäßriger und öliger Phase herabsetzen und die Schadstoffe ausschwemmbar bzw. emulgierbar machen. Durch Einsatz von Ultraschall im Boden kann dieser Prozeß beschleunigt werden. Tenside sind in jedem Waschmittel enthalten. Als Schadstoffe werden in dieser Weise insbesondere ein oder mehrere Stoffe aus der Gruppe "CKW, Lösemittel wie z.B. Tetrahydrofuran (THF), polychlorisierte Biphenyle (PCB), polychlorierte Phenole (PCP); Mineralölprodukte, wie z.B. Benzol, Toluol, Xylol, Heterocylen, Teerprodukte, wie Asphalt etc., sofern noch in öliger Phase, Phenole und Kresole" entfernt (Ansprüche 2 und 3).

Strategie 2: Enzymatischer Ab- und/oder Umbau von Schadstoffen, insbesondere fester organischer Verbindungen, um durch den Um- und Abbau die Schadstoffe mobilisierbar zu machen. Enzyme sind die eigentlichen Wirksubstanzen von Mikroorganismen. Mit der Erfindung können vorteilhafterweise, also ohne Einsatz von Mikroorganismen, die z.B. durch toxische Konzentrationen abgetötet würden, hochtoxische Schadstoffkonzentrationen bekämpft werden, ohne daß der Nachteil der zum Teil toxischen Stoffwechselprodukte aus mikrobieller Tätigkeit eingegangen werden muß. Enzyme werden in Waschmitteln eingesetzt. So war "Burnus" das erste enzymatische Waschmittel. Die Umbauprodukte sind entweder wasserlöslich, emulgierbar oder zumindest durch Wasser transportierbar. Aus Schadstoffe werden hiermit insbesondere ein oder mehrere Stoffe aus der Gruppe: "Härtebildner, wie z.B. $HCO_3$, Sulfationen, Karbonationen und z.B. Schwermetalle, wie Blei, Kupfer, Nickel, Zink, Eisen, Quecksilber und Silberverbindungen, wie z.B. Sublimat und Kalomel, die jeweils in wasserlösliche Komplexverbindungen umwandelbar sind" entfernt (Ansprüche 4 und 5).

Strategie 3: Mobilisierung wasserunlöslicher oder schwach wasserlöslicher anorganischer Schadstoffe durch Komplexbildner, insbesondere Chelatbildner. Die Komplex- bzw. Chelatbildner bilden mit den genannten Schadstoffen Komplexverbindungen, die meist wasserlöslich sind und somit im elektrischen Spannungsfeld mobilisiert werden können. Als Schadstoffe werden hiermit insbesondere ein oder mehrere Stoffe aus der Gruppe: "alle gelartigen und festen organischen Substanzen, wie z.B. höhere Nitrotoluole, höhere Nitrobenzole, nitrierte Amine, höhere Toluidine und alle höheren chlorierten bzw. nitrierten organischen Verbindungen" entfernt (Ansprüche 6 bis 8).

Voraussetzung für die Anwendung des erfindungsgemäßen Verfahrens sind eine oder mehrere organische Substanzen in flüssiger bzw. öliger Phase und/oder eine oder mehrere anorganische Substanzen in flüssiger bzw. öliger Phase und/oder eine oder mehrere anorganische, wasserunlösliche oder schwach wasserlösliche Verbindungen. Je nach anzuwendender Verfahrensstrategie werden diese Schadstoffe entweder durch Herabsetzung der Oberflächenspannung für das Ausschwemmen mittels Wasser mobilisiert, oder in Wasser emulgiert, oder chemisch so umgewandelt, daß eine Emulsion oder wasserlösliche Verbindung hergestellt wird, die dann elektroosmotisch mit Wasser gezielt zu der Stelle im Boden- respektive Grundwasserbereich transportiert werden, an der sie aus dem Boden- respektive Grundwasserbereich ausgetragen werden kann. Als Tenside werden anionische Tenside (Anspruch 10) bevorzugt.

Das erfindungsgemäße Verfahren ist vorteilhafterweise auch für kleiner $10^{-9}$ m/s geeignet (Anspruch 11). Die Verfahrensgrenze liegt bei Locker- und Festgestein dort, wo entweder keine Kapillarräume ausgebildet sind oder das Gestein aufgrund seiner Beschaffenheit nicht wasserwegsam ist.

Wenn nicht die in Anspruch 12 angegebene in-situ Reinigung, sondern die in Anspruch 13 angegebene Reinigung außerhalb, d.h. in der on-site bzw. off-site Anwendung gereinigt wird, ist es zweckmäßig, diese Reinigung gemäß Anspruch 14 oder 15 auszuführen, wobei sich in beiden Fällen Beton (Anspruch 10) als Material eignet.

Vorzugsweise werden chemische Substanzen verwendet, die biologisch voll abbaubar sind (Anspruch 17).

Die Überführung der Schadstoffe in eine wasserlösliche Form bedeutet, daß sie elektroosmotisch, bei anorganischen Substanzen überlagert von elektroforetischen Mechanismen, transportierbar sind. Die Überführung in eine wasserlösliche Form kann zum Teil durch enzymatischen Um- und Abbau von organischen Substanzen, im Falle von anorganischen Substanzen durch Komplexbildner (Chelatbildner) erfolgen. Die Dispergierung bzw. Emulgierung von organischen Substanzen in wäßriger oder öliger Phase kann durch waschaktive Substanzen, wie z.B. Tenside, erfolgen.

Soweit die Waschwirkung der Tenside betroffen ist, liegt diese im wesentlichen in der Herabsetzung der Grenzflächenspannung des Wassers, im Loslösen der Kohlenwasserstoffe von den Bodenpartikeln und in der Dispergierung oder Emulgierung der Kohlenwasserstoffe, die mit dem Wasser zur Kathode befördert und dort auf geeignete Weise aus dem Wasser entfernt werden können. Die Entfernung der Emulsionen kann z.B. auf dem Wege der $CO_2$-Flatation mit Abpumpen des Flotats (siehe deutsche Patentanmeldung P 40 06 435.2) erfolgen. Eine andere Möglichkeit besteht im Abpumpen des Wassers, anschließender Emulsionsspaltung und Aufbereitung des abgepumpten Wassers entweder on-site oder off-site.

Soweit Enzyme betroffen sind, liegt ihre Wirkung im wesentlichen im Ab- und Umbau organischer Substanzen, wobei die Umwandlungsprodukte entweder wasserlöslich oder in Wasser dispergierbar bzw. emulgierbar sind und somit mit dem Wasser ausgetragen werden können.

Soweit Chelatbildner eingegeben werden, beruht deren Wirkung einmal darauf, daß sie in ihrer Eigenschaft als "builder" oder Gerüststoffe durch Herabsetzung der Wasserhärte die Wirkung der Tenside verstärken. Zum anderen haben sie die Aufgabe, Schwermetalle und Schwermetallverbindungen sowie eine Reihe von anderen Schadstoffen, wie beispielsweise Cyanide in wasserlösliche Komplexverbindungen umzuwandeln, die dann mit dem Wasser zu einer Kathode transportiert und dort auf geeignete Weise aus dem wasserhaltigen Boden entfernt werden können. Sinnvollerweise geschieht dies durch Abpumpen. Das die wasserlöslichen Bindungsformen enthaltende Wasser kann auch mit Wasserstoffperoxid oder Caro'scher Säure und/oder Ultraschall behandelt werden. Diese Behandlung kann in-situ aber auch on- oder off-site durchgeführt werden.

Es können auch chemische Mittel verwendet werden, die in der deutschen Patentanmeldung P 39 29 634.2 angegeben sind. Auch chemische Mittel, die geeignet sind, die Schadstoffe im wasserhaltigen Boden zu lösen und auf diese Art zu mobilisieren, und damit für den Austrag aus dem Boden bereitstellen, können verwendet werden.

Ist der Erdbodenbereich wasserarm oder -frei wird er zweckmäßigerweise künstlich bewässert (Anspruch 18). Ist im Erdbodenbereich Grundwasser vorhanden, so können die Bereiche oberhalb grundwasserführender Schichten durch Erhöhung des Grundwasserspiegels bewässert werden (Anspruch 19). Dies kann beispielsweise mittels eines angelegten und auf den Grundwasserspiegel einwirkenden Unterdrucks erfolgen. In diesem Fall werden beispielsweise ein oder mehrere Brunnenrohre bis in den Grundwasserleiter eingebracht und an diese ein starker Unterdruck, beispielsweise mittels einer Vakuumpumpe, einem Sauggebläse und/oder einer Strahlpumpe angelegt.

Der Erdbodenbereich kann aber auch von außen bewässert werden (Anspruch 20). In diesem Fall wird der Erdbodenbereich, beispielsweise der Bodenbereich oberhalb grundwasserführender Schichten mit in den Erdbodenbereich eingebrachten Spüllanzen bewässert (Anspruch 21). Dabei ist es vorteilhaft, den Erdbodenbreich mit einer wäßrigen Lösung aus der oder den wasserlöslichen chemischen Mitteln zu bewässern (Anspruch 22). In diesem Fall werden das Wasser und die chemischen Mittel in einem Arbeitsgang in den Boden eingebracht.

Das für die Elektroosmose erforderliche elektrische Feld wird durch in den Erdbodenbereich eingebrachte Elektroden erzeugt, an die eine das für die Elektroosmose erforderliche elektrische Feld erzeugende elektrische Spannung angelegt wird (Anspruch 23).

Die Länge und Einbautiefe einer Elektrode wird sinnvollerweise so gewählt, daß die Elektrode bis zu der maximalen Tiefe, bis zu welcher der Erdbodenbereich schadstoffbelastet ist, eingebracht ist (Anspruch 24).

Zweckmäßigerweise werden die Elektroden in Form von Stahl-Brunnenrohren unter Einschluß von Stahl-Filterrohren ausgebildet (Anspruch 25). Für Einbautiefen der Brunnen von mehr als acht Metern können jedoch Brunnenrohre aus Kunststoffen mit eingebauten Stabelektroden verwandt werden.

Da der elektroosmotische Wassertransport von der Anode zur Kathode erfolgt, ist es zweckmäßig, wenn an die Elektroden ein Gleichstrom angelegt wird (Anspruch 26).

Bei speziellen Anwendungen kann jedoch auch ein Wechselstrom an die Elektroden angelegt werden (Anspruch 27), der frequenzmoduliert sein kann (Anspruch 28). An die Elektroden kann auch alternierend ein sogenannter pulsierender Strom angelegt werden (Anspruch 29).

Zweckmäßig ist es, eine chemische Substanz durch eine als Filterrohr ausgebildete Anode verwendete Elektrode in den Erdbodenbereich einzubringen (Anspruch 30). Beispielsweise können Tenside, Enzyme oder Chelatbildner auf diese Weise eingebracht werden.

Zweckmäßig ist es auch, wenn eine als Kathode verwendete Elektrode als Filterrohr ausgebildet ist, durch welches die eine oder mehreren mit Wasser elektroosmotisch transportierbaren Formen (4) aus dem Erdbodenbereich entfernt werden (Anspruch 31).

Es kann aber auch so vorgegangen werden, daß eine als Kathode verwendete Elektrode als Flächen- oder Stabelektrode ausgebildet ist, und die einen oder mehreren mit Wasser elektroosmotisch transportierten Mittel über eine getrennte Absaugstelle aus dem Erdbodenbereich abgesaugt, flotiert oder abgepumpt werden (Anspruch 32). Vorzugsweise ist die getrennte Stelle eine Absaugstelle in Form eines verrohrten Brunnens (Anspruch 33).

Weitere vorteilhafte Ausgestaltungen gehen aus weiteren Unteransprüchen hervor. Insbesondere kann gemäß den Ansprüchen 39 bis 44 das erfindungsgemäße Verfahren zur Erdölgewinnung herangezogen werden. Dabei ist es, wie dies später noch näher erläutert wird, besonders vorteilhaft, daß die zur herkömmlichen Erdölgewinnung in einem Erdbodenbereich bereits vorhandenen Einrichtungen zur Durchführung des vorliegenden Verfahrens verwendet werden können. Erdölhaltige Speichergesteine können bei Anwendung des erfindungsgemäßen Verfahrens bis zu etwa 90 % ausgebeutet werden.

Die Erfindung wird anhand der Figuren in der folgenden Beschreibung beispielhaft näher erläutert. Es zeigen:

| | |
|---|---|
| Fig. 1 | eine schematische Darstellung zur Erläuterung der Erfindung, |
| Fig. 2 | schematisch und nicht maßstäblich einen vertikalen Schnitt durch einen schadstoffbelasteten Erdbodenbereich mit Grundwasserleitern und eingebrachten Elektroden, |
| Fig. 3 und 4 | Elektroden zur Durchführung des vorliegenden Verfahrens, und |
| Fig. 5 | die Anwendung der Erfindung zur Erdölgewinnung. |

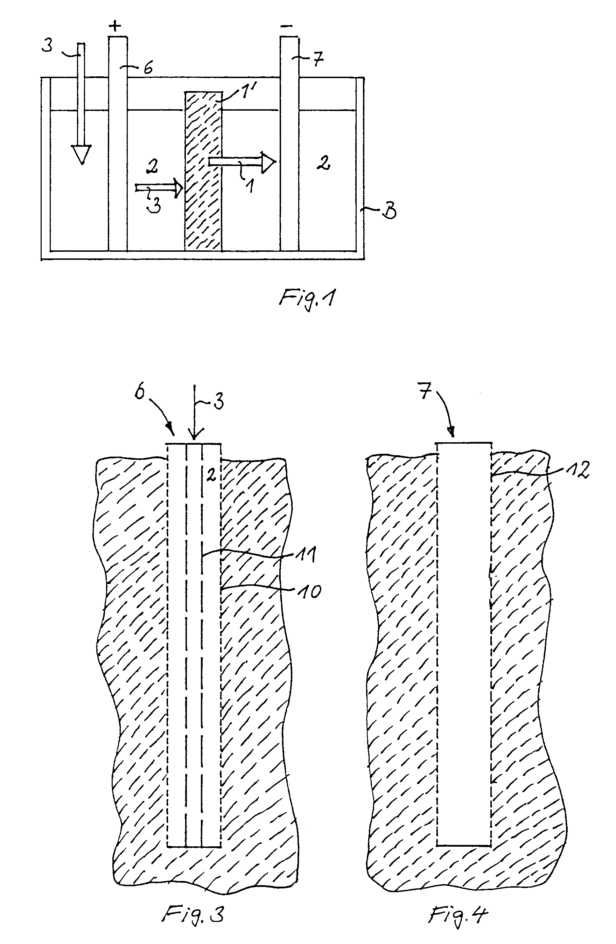

Zu der Erfindung führten die folgenden Überlegungen. Es wurde herausgefunden, daß, wenn man gemäß Figur 1 in einem Wasserbecken B voneinander beabstandet eine Anode 6 und eine Kathode 7 anordnet und sich zwischen diesen ein Diaphragma 1' in der Form einer nach unten und zu den Seiten abdichtenden Schicht aus einem bindigen, kaum wasserdurchlässigen Boden befindet, die mit wenigstens einem bestimmten Schadstoff, in der Form eines Mineralölproduktes kontaminiert ist, wobei sich auf beiden Seiten der Schicht 1' Wasser derart befindet, daß die Wasserpegel unter dem oberen Ende der Schicht 1 enden, geschieht beim Anlegen einer Gleichspannung von etwa 250 V an die Anode 6 und die Kathode 7 folgendes. Während vor dem Anlegen der Spannung die Wassermengen beiderseits der Schicht 1' klar sind, trübt sich die die Kathode 7 umgebende Wassermenge in einer relativ kurzen Zeit (etwa nach etwa 10 min.) derart, daß die Kathode 7 kaum mehr zu sehen ist. Die dabei durch das Diaphragma bzw. die Schicht 1 hindurchtretende Wassermenge liegt in der Größenordnung von etwa 17,14 m/Tag, was für einen bindigen Boden extrem hoch ist. Die die Anorde 6 umgebende Wassermenge verfärbt sich dabei nicht. Es wurde herausgefunden, daß es für dieses Experiment Voraussetzung ist, daß in die die Anode 6 umgebende Wassermenge eine bestimmte Waschsubstanz, bei der es sich im vorliegenden Fall um Tenside handelte, eingebracht wird. Bei dem die die Kathode 7 umgebende Wassermenge trübenden bzw. schwärzenden Mittel handelt es sich um Phenole, die normalerweise in dem bindigen Boden derart haften, daß sie in dem Boden zurückgehalten und gespeichert werden. Durch die Zugabe der Tenside in die die Anode 6 umgebende Wassermenge, wird erreicht, daß mit den Tensiden beladenes Wasser durch die Schicht 1' hindurchtritt und dabei die Phenole in eine wasserlösliche bzw. wassertransportable Form überführt und aus der Schicht 1' in die die Kathode 7 umgebende Wassermenge treibt.

Anders und allgemein ausgedrückt läßt sich durch elektroosmotische Vorgänge, bei denen die Schicht 1' aus dem schadstoffbelasteten Boden ein Diaphragma bildet, erreichen, daß die durch eine Waschsubstanz in eine wasserlösliche bzw. elektroosmotisch transportable Form übergeführten Schadstoffe aus der Schicht 1' in das die Kathode 7 umgebende Wasser ausgetrieben werden, wobei die Waschsubstanz dem die Anode 6 umgebenden Wasser zugeführt wird.

Dieses Verfahren eignet sich nicht nur zum Austreiben von Mineralölprodukten. Bei Einsatz anderer Waschsubstanzen können problemlos auch andere Schadstoffe, wie zum Beispiel Schwermetalle ausgetrieben werden.

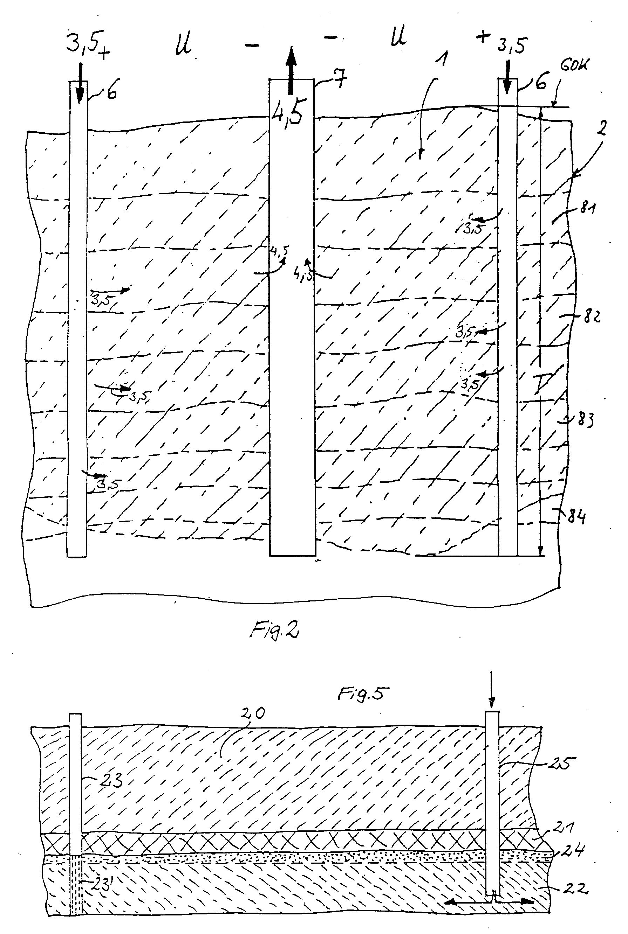

Im folgenden wird anhand der Figur 2 ein praktisches Beispiel erläutert. Figur 2 zeigt einen Ausschnitt aus dem Gelände einer Braunkohlenschwelerei in der Größe von etwa 2 ha, dessen Erdbodenbereich bis zu einer maximalen Tiefe T von 65 m ab der Geländeroberkante GOK mit einem Schadstoff 1 in Form einer öligen Phase verseucht ist, die im wesentlichen aus Phenolen und/oder Kresolen und/oder Xylenolen und/oder Benzidin und/oder Benz(a)pyren und/oder Antracen und/oder Corone und/oder Anilin und gegebenenfalls anderen Stoffen besteht. Im verseuchten Erdbodenbereich befinden sich z.B. vier Grundwasserstockwerke mit Grundwasserleitern 81, 82, 83 und 84. In diesen Grundwasserleitern 81, 82, 83 und 84 hat der Boden einen Durchlässigkeitsbeiwert von beispielsweise etwa $2,2 \times 10^{-3}$ m/sec. In den übrigen Bodenbereichen außerhalb und zwischen den Grundwasserleitern 81 bis 84 hat der Boden einen Durchlässigkeitsbeiwert von beipielsweise etwa $8,0 \times 10^{-6}$ m/s bis $1,0 \times 10^{-7}$ m/s.

Das Gelände kann mit nicht dargestellten Werksgebäuden aller Art dicht belegt sein.

Zur Sanierung sind in den ein Diaphragma bildenden Erdbodenbereich mehrere in Elektrodenreihen angeordnete Elektroden 6 und Elektrodenreihen aus Elektroden 7 eingebracht, die bis zur maximalen schadstoffbelasteten Tiefe T reichen. Die Elektrodenreihen verlaufen vertikal zur Zeichenebene und innerhalb jeder Reihe beträgt der Elektrodenabstand beispielsweise etwa 4m. Der Abstand zwischen einer Reihe aus Elektroden 6 und einer Reihe aus Elektroden 7 beträgt beispielsweise etwa 6 m. Die Elektroden 6 sind als Filterrohre mit einem Durchmesser von etwa 51 mm und aus Stahl ausgebildet. Diese Elektroden 6 bilden die Anoden. Die Elektroden 7 bilden die Kathoden und sind als Stahlrohre mit einem Durchmesser von 120 mm ausgebildet. Jede Reihe aus Kathoden 7 liegt zwischen zwei Reihen aus Anoden 6.

Für die Elektroosmose wird zwischen die Kathoden 7 und die benachbarten Anoden 6 eine Gleichspannung von z.B. etwa 36 Volt bei einer Stromstärke von 2,1 Ampere angelegt. Als chemische Waschsubstanz 3 dient eine geringe Konzentration eines Gemisches aus verschiedenen anionischen Tensiden, die voll biologisch abbaubar sind. Diese Waschsubstanz 3 wird mit Wasser 5 durch die Anoden 6 in den Erdbodenbereich eingebracht. Das mit Tensiden angereicherte Wasser wird elektroosmotisch durch den Boden getrieben. Hierbei schwemmt das tensidisch angereicherte Wasser die Schadstoffe aus und transportiert sie gezielt zu den Kathoden 7, die den vorher definierten Bereich bilden, der vorzugs- und vorteilhafterweise eng begrenzt ist. In den Elektroden 7 werden die Schadstoffe ausgetragen. Der Austrag kann beispielsweise über das $CO_2$-Stripping oder $CO_2$-Flotation und Abzug des Flotats mittels einer 1 3/4-Zoll-Tauchpumpe erfolgen (siehe dazu deutsche Patentanmeldung P 40 06 435.2). Der elektroosmotische Transport des Wassers mit geringen Mengen an Tensiden äußert sich in einer erhöhten Fließgeschwindigkeit des Wassers durch den dichten Boden von z.B. etwa 17,14 m/h und einem entsprechenden Druck.

Die in den Ansprüchen 2 bis 10 angegebenen Verfahren sind miteinander zeitlich und räumlich kombinierbar.

Das Verfahren kann so ergänzt werden, daß die dem Boden entnommene ölige Phase in der Weise von der wässrigen Phase (ohne Zusatzstoffe) getrennt wird, daß in einem Behälter die wässrige Phase von der öligen durch ein Diaphragma aus z.B. gebranntem, aber nicht glasierten Ton elektroosmotisch getrennt wird.

Im folgenden wird eine Übersicht über mögliche Waschsubstanzen und die damit aus dem Diaphragma bzw. dem bindigen Boden elektroosmotisch austreibbaren Schadstoffen erläutert:

Tenside: Alle organischen Substanzen, in flüssiger bzw. öliger Phase. Hierzu gehören: sämtliche CKW; Lösemittel wie z.B. Tetrahydrofuran (THF), polychlorisierte Biphenyle (PCB), polychlorierte Phenole (PCP); Mineralölprodukte, wie Benzol, Toluol, Xylol, Heterocylen, Teerprodukte, wie Asphalt etc., sofern noch in öliger Phase, Phenole, Kresole.

Chelatbildern: hauptsächlich: 1) Härtebildner, wie $HCO_3$, Sulfationen, Karbonationen. 2) Schwermetalle, wie Blei, Kupfer, Nickel, Zink, Eisen, Quecksilber, Silberverbindungen, wie Sublimat, Kalomel, die jeweils in wasserlösliche Komplexverbindungen umwandelbar sind. Als Chelatbildner sind beispielsweise RDTA oder Epifloc und andere verwendbar.

Enzyme: 1) alle gelartigen und festen organischen Substanzen, wie höhere Nitrotoluole, höhere Nitrobenzole, nitrierte Amine, höhere Toluidine, alle höheren chlorierten bzw. nitrierten organischen Verbindungen. 2) Bestimmte Metalle wie Eisen, zum Teil aber auch Kupfer, Blei lassen sich durch Enzyme anreichern, so daß sie Erze bilden.

Dabei greifen die in den Bodenbereich transportierten Enzyme die genannten Schadstoffe gezielt an und wandeln diese in eine wasserlösliche bzw. elektroosmotisch transportierbare Form um. Beim Transport der Enzyme zu den Schadstoffen werden die Enzyme nicht beschädigt, da kein mechanischer Druck auf sie ausgeübt wird. Die Schadstoffe werden dabei direkt in eine wässrige Phase oder in eine ölige und aus dieser mit der Hilfe von Tensiden in eine wässrige Phase übergeführt, die zur Kathode transportiert wird.

Figur 3 zeigt die vorzugsweise Ausgestaltung einer Anode 6 in der Form eines porösen Filterrohres 10 aus Stahl, in dem sich ein Innenrohr 11 befindet. Im Filterrohr 10 befindet sich Wasser, das aus den Bodenbereichen 81 bis 84 einströmt. In das Innenrohr 11 werden die Waschsubstanzen 3 eingegeben. Sie vermischen sich im Innenrohr 11 mit dem in dieses über Öffnungen der Wandung des Innenrohres 11 einströmenden Wasser.

Figur 4 zeigt die bevorzugte Ausgestaltung einer Kathode 7 als Filterrohr 12. In dieses Filterrohr 12, das vorzugsweise aus Stahl besteht, strömt das mit den Schadstoffen 1 beladene Wasser, so daß die Schadstoffe 1 in der oben beschriebenen Weise aus dem Filterrohr 12 entfernt werden können.

Im folgenden wird eine Weiterbildung der Erfindung erläutert, bei der im Gegensatz zur bisherigen Ausführungsform nicht Schadstoffe sondern Nutzstoffe aus einem Erdbodenbereich ausgetrieben werden. Insbesondere dient diese Weiterbildung zur Erdölgewinnung. Zur Erläuterung dieser Weiterbildung ist in der Figur 5 schematische eine Erdöllagerstätte dargestellt. Mit 20 ist ein Deckgebirge bezeichnet, unter dem sich das das Erdöl enthaltende Speichergestein 22 befindet. Zwischen dem Speichergestein 22 und dem Deckgebirge 20 befindet sich eine gasundurchlässige Schicht 21. Unter der gasundurchlässigen Schicht befindet sich eine Gasblase 24 mit einem Druck von beispielsweise bis zum 789 bar. Zur primären Erdölförderung wird durch das Deckgebirge 20 ein Bohrloch 23 eingebracht, das durch die gasundurchlässige Schicht 21 bis in das Speichergestein 22 hineinführt. Im Bereich des Speichergesteins 22 wird das Bohrloch durch ein Filterrohr 23' ausgekleidet. Durch den Druck der Gasblase 24 wird erreicht, daß das Erdöl aus dem Speichergestein 22 durch das Filterrohr 23' in das Bohrloch 23 gedrückt wird und in diesem aufgrund des Druckes der Gasblase 24 von allein nach oben steigt, so daß es an der Erdoberfläche gefördert werden kann. Nach diesem bekannten Verfahren können etwa 20 % des Erdöls aus dem Speichergestein 22 gefördert werden.

Durch die ebenfalls bekannte Sekundärförderung können etwa weitere 10 % Erdöl aus dem Speichergestein 22 gefördert werden. Hierzu wird in einem vorbestimmten Abstand vom Bohrloch 23 ein weiteres Bohrloch 25 eingebracht, das ebenfalls durch das Deckgebirge 20, die gasundurchlässige Schicht 21 bis in das Speichergestein 22 hineinreicht. In dieses Bohrloch 25 wird ein Druckmedium, beispielsweise Pressluft oder unter Druck befindliches Wasser eingebracht, so daß im Speichergestein 22 ein Druck künstlich aufgebaut wird, der Erdöl durch das Filterrohr 23' und das Bohrloch 23 zur Erdoberfläche treibt.

Durch die primäre Förderung, die sekundäre Förderung und eine der sekundären Förderung ähnlich tertiäre Förderung, die ebenfalls bekannt ist, lassen sich etwa 35 % des im Speichergestein 22 enthaltenden Erdöles fördern. Als Rest verbleiben somit etwa 65 % Erdöl im Speichergestein 22. Hier setzt das vorliegende Verfahren an. Durch Einbringen von mit Tensiden als Waschsubstanz versetztem Wasser unter Druck durch die Bohrung 25, die von der sekundären Förderung her ohnehin mit einem Stahlrohr ausgekleidet ist, wird erreicht, daß die Tenside die im Speichergestein 22 befindlichen Erdölreste in eine wasserlösliche Form überführen, so daß sie beim Anlegen einer negativen Spannung an das das Bohrloch 23 auskleidende Stahlrohr und einer positiven Spannung an das Stahlrohr der Bohrung 25 elektroosmotisch zusammen mit Wasser in der Form einer Emulsion durch das Filterrohr 23' und das Bohrloch 23 zur Erdoberfläche transportiert werden, wo eine elektrochemische Trennung des Erdöls vom Wasser und eine Aufbereitung des Erdöls erfolgen kann.

Da die Bohrungen 23, 25 in einem Erdölfeld etwa 300 bis 400 Meter auseinanderliegen, wird die an die Stahlrohre der Bohrlöcher 23 und 25 anzulegende Spannung etwa 600 bis 1000 Volt betragen. Hervorzuheben ist, daß für die Anwendung des vorliegenden Verfahrens zur Erdölgewinnung keine besonderen Maßnahmen getroffen werden müssen, da die Bohrlöcher 23, 25 bereits vorhanden und ohnehin mit Stahlrohren ausgekleidet sind, die als Elektroden dienen können. Es muß lediglich in das Bohrloch 25 das mit Tensiden versetzte Wasser unter Druck eingebracht werden und an die Stahlrohre der Bohrlöcher 23, 25 die genannte Spannung angelegt werden.

Durch die in das Speichergestein 22 eingebrachten Tenside wird erreicht, daß das gespeicherte Öl dünnflüssiger wird und daher im Speichergestein 22 aufgrund des angelegten Spannung eine zur Erdölgewinnung geeignete Transportgeschwindigkeit, die beispielsweise bei etwa 30 Meter pro Tag liegt, erreicht. Mit dem vorliegenden Erdölgewinnungsverfahren lassen sich Erdölfelder im Zusammenhang mit der primären, sekundären und tertiären Förderung bis zu etwa 90 % ausbeuten.

**Patentansprüche**

1. Verfahren zur Reinigung eines mit einem oder mehreren Stoffen (1) belasteten Erdbodenbereiches (2), dadurch gekennzeichnet,
 - daß in den belasteten Erdbodenbereich (2) ein oder mehrere Mittel (3) eingebracht werden, welche den oder die Stoffe (1) in eine oder mehrere mit Wasser elektroosmotisch transportierbare Formen (4) überführen, und

- daß die eine oder mehreren transportierbaren Formen (4) im Erdbodenbereich (2) zusammen mit Wasser elektroosmotisch zu einem vorher definierten Bereich (7) transportiert werden, wo sie aus dem Erdbodenbereich (2) entfernbar sind.

2. Verfahren nach Anspruch 1, zur Reinigung eines mit einem oder mehreren Schadstoffen (1) in Form einer oder mehrerer organischer Substanzen in flüssiger und/oder öliger Phase belasteten Erdbodenbereiches (2), dadurch gekennzeichnet,

- daß in den belasteten Erdbodenbereich (2) ein oder mehrere Tenside als Mittel (3) eingebracht werden,
- daß hierbei das tensidisch angereicherte Wasser den oder die Schadstoffe (1) von den umgebenden Bodenpartikeln löst und in eine mit Wasser elektroosmotisch transportierbare Form (4), bestehend aus gelösten, suspendierten, dispergierten und/oder emulgierten Schadstoffen (1) überführt und
- daß das elektroosmotisch bewegte Wasser diese Form (4) zu dem vorher definierten Bereich (7) transportiert, wo sie aus dem Erdbodenbereich (2) entfernbar ist.

3. Verfahren nach Anspruch 2, dadurch gekennzeichnet, daß als Schadstoff (1) ein oder mehrere Stoffe aus der Gruppe: "CKW, Lösemittel, wie z.B. Tetrahydrofuran (THF), polychlorisierte Biphenyle (PCB), polychlorierte Phenole (PCP); Mineralölprodukte, wie z.B. Benzol, Toluol, Xylol, Heterocylen, Teerprodukte, wie Asphalt etc., sofern noch in öliger Phase, Phenole und Kresole" aus dem Erdbodenbereich (2) entfernt werden.

4. Verfahren nach Anspruch 1 zur Reinigung eines mit einem oder mehreren Schadstoffen (1) in Form einer oder mehrerer organischer Substanzen in gelartiger oder fester Phase belasteten Erdbodenbereichs (2), insbesondere in Kombination mit einem Verfahren nach Anspruch 2 oder 3, dadurch gekennzeichnet,

- daß in den belasteten Erdbodenbereich (2) ein oder mehrere Enzyme als Mittel (3) eingebracht werden,
- daß das oder die Enzyme den oder die Schadstoffe (1) durch Um- und/oder Abbau der einen oder mehreren gelartigen oder festen organischen Substanzen in eine mit Wasser elektroosmotisch transportierbare Form (4) überführen, und

- daß die durch die Enzyme erzeugte transportierbare Form (4) mit Wasser elektroosmotisch zu dem vorher definierten Bereich (7) transportiert wird, wo sie aus dem Erdbodenbereich (2) entfernbar ist.

5. Verfahren nach Anspruch 4, dadurch gekennzeichnet, daß als Schadstoff (1) ein oder mehrere Stoffe aus der Gruppe: "Härtebildner, wie z.B. $HCO_3$, Sulfationen, Karbonationen und z.B. Schwermetalle, wie Blei, Kupfer, Nickel, Zink, Eisen, Quecksilber und Silberverbindungen, wie z.B. Sublimat und Kalomel, die jeweils in wasserlösliche Komplexverbindungen umwandelbar sind", aus dem Erdbodenbereich (2) entfernt werden.

6. Verfahren nach Anspruch 1 zur Reinigung eines mit einem oder mehreren anorganischen und wasserunlöslichen und/oder schwach wasserlöslichen Substanzen belasteten Erdbodenbereiches (2), insbesondere in Kombination mit einem Verfahren nach Anspruch 2 und/oder nach Anspruch 3, dadurch gekennzeichnet,

- daß in den belasteten Erdbodenbereich (2) ein oder mehrere Komplexbildner als Mittel (3) eingebracht werden,
- daß der oder die Komplexbildner die eine oder mehreren vorher wasserunlöslichen oder schwach wasserlöslichen anorganischen Substanzen durch Umwandlung in eine oder mehrere wasserlösliche Komplexverbindungen in eine mit Wasser elektroomotisch transportierbare Form (4) überführen, und
- daß die aus der oder den mehreren wasserlöslichen Komplexverbindungen bestehende Form (4) mit Wasser elektroosmotisch zu einem vorher definierten Bereich (7) transportiert wird, wo sie aus dem Erdbodenbereich (2) entfernbar ist.

7. Verfahren nach Anspruch 6, dadurch gekennzeichnet, daß als Komplexbildner Chelatbildner eingebracht werden.

8. Verfahren nach Anspruch 6 oder 7, dadurch gekennzeichnet, daß als Schadstoff (1) ein oder mehrere Stoffe aus der Gruppe: "alle gelartigen und festen organischen Substanzen, wie z.B. höhere Nitrotoluole, höhere Nitrobenzole, nitrierte Amine, höhere Toluidine und alle höheren chlorierten bzw. nitrierten organischen Verbindungen" aus dem Erbodenbereich (2) entfernt werden.

9. Verfahren nach Anspruch 1, insbesondere in Kombination mit einem oder mehreren der Ansprüche 1 bis 4, dadurch gekennzeichnet,
   - daß in den belasteten Erdbodenbereich (2) ein oder mehrere aus der Stoffgruppe der Säuren, Laugen, Aldehyde, Oxidationsmittel in Abhängigkeit von der chemischen und/oder physikalischen Beschaffenheit des oder der Schadstoffe (1) als Mittel (3) eingebracht werden,
   - daß das oder die ausgewählten Mittel (3) durch Reaktion mit dem oder den Schadstoffen (1) diese Schadstoffe (1) in eine aus wasserlöslichen oder suspendierten, dispergierten oder emulgierten Stoffen bestehende, mit Wasser elektroosmotisch transportierbare Form (4) überführen, und
   - daß die aus diesen Stoffen bestehende transportierbare Form (4) elektroosmotisch zu einem vorher definierten Bereich (7) transportiert wird, wo sie aus dem Erdbodenbereich (2) entfernbar ist.

10. Verfahren nach Anspruch 2, dadurch gekennzeichnet, daß ein oder mehrere Tenside aus der Gruppe der anionischen Tenside ausgewählt ist oder sind.

11. Verfahren nach einem der vorhergehenden Ansprüche, dadurch gekennzeichnet, daß der belastete Erdbodenbereich (2) einen Durchlässigkeitsbeiwert für Wasser aufweist, der kleiner als $10^{-9}$ m/s ist.

12. Verfahren nach einem der vorhergehenden Ansprüche, dadurch gekennzeichnet, daß der belastete Erdbodenbereich (2) an Ort und Stelle verbleibt.

13. Verfahren nach einem der Ansprüche 1 bis 10, dadurch gekennzeichnet, daß der belastete Erdbodenbereich (2) ausgehoben und das oder die chemischen Mittel (3) in den ausgehobenen Erdbodenbereich (2) eingebracht werden.

14. Verfahren nach Anspruch 13, dadurch gekennzeichnet, daß der ausgehobene Erdbodenbereich (2) in einen geschlossenen Behälter eingebracht wird.

15. Verfahren nach Anspruch 13, dadurch gekennzeichnet, daß der ausgehobene Erdbodenbereich (2) in einen wannenförmigen Behälter eingebracht wird.

16. Verfahren nach Anspruch 14 oder 15, dadurch gekennzeichnet, daß der geschlossene oder wannenförmige Behälter aus Beton besteht.

17. Verfahren nach einem der vorhergehenden Ansprüche, dadurch gekennzeichnet, daß das Mittel (3) biologisch abbaubar ist.

18. Verfahren nach einem der vorhergehenden Ansprüche, dadurch gekennzeichnet, daß der wasserarme oder -freie Erdbodenbereich (2) künstlich bewässert wird.

19. Verfahren nach Anspruch 18, dadurch gekennzeichnet, daß der Erdbodenbereich (2) durch eine Erhöhung eines Grundwasserspiegels bewässert wird.

20. Verfahren nach Anspruch 18, dadurch gekennzeichnet, daß der Erdbodenbereich (2) von außen bewässert wird.

21. Verfahren nach Anspruch 12, dadurch gekennzeichnet, daß der Erdbodenbereich (2) mit in den Erdbodenbereich (2) eingebrachten Spüllanzen (7) bewässert wird.

22. Verfahren nach Anspruch 20 oder 21, dadurch gekennzeichnet, daß der Erdbodenbereich (2) mit einer wäßrigen Lösung aus der oder den wasserlöslichen Substanzen (3) bewässert wird.

23. Verfahren nach einem der vorhergehenden Ansprüche, dadurch gekennzeichnet, daß in den Erdbodenbereich (2) Elektroden (6, 7) eingebracht werden, an die eine das für die Elektroosmose erforderliche elektrische Feld erzeugende Spannung (U) anlegbar ist.

24. Verfahren nach Anspruch 23, dadurch gekennzeichnet, daß eine Elektrode (6, 7) bis zu einer maximalen Tiefe (T), bis zu welcher der Erdbodenbereich (2) schadstoffbelastet ist, eingebracht wird.

25. Verfahren nach Anspruch 23 oder 24, dadurch gekennzeichnet, daß eine Elektrode (6, 7) in Form eines Pegel- bzw. bzw. Filterrohres aus Stahl ausgebildet ist.

26. Verfahren nach einem der Ansprüche 23 bis 25, dadurch gekennzeichnet, daß an Elektroden (6, 7) ein Gleichstrom angelegt wird.

27. Verfahren nach einem der Ansprüche 21 bis 26, dadurch gekennzeichnet, daß an Elektroden (6, 7) ein Wechselstrom angelegt wird.

28. Verfahren nach Anspruch 27, dadurch gekennzeichnet, daß der Wechselstrom frequenzmoduliert ist.

29. Verfahren nach einem der Ansprüche 23 bis 28, dadurch gekennzeichnet, daß an Elektroden (6, 7) ein pulsierender Strom angelegt wird.

30. Verfahren nach einem der Ansprüche 23 bis 29, dadurch gekennzeichnet, daß ein Mittel (3) durch eine als Filterrohr ausgebildete und als Anode verwendete Elektrode (6) in den Erdbodenbereich (2) eingebracht wird.

31. Verfahren nach einem der Ansprüche 23 bis 30, dadurch gekennzeichnet, daß eine als Kathode verwendete Elektrode (7) als Filterrohr ausgebildet ist, durch welches die eine oder mehreren mit Wasser elektroosmotisch transportierbaren Formen (4) aus dem Erdbodenbereich (2) entfernt werden.

32. Verfahren nach einem der Ansprüche 23 bis 31, dadurch gekennzeichnet, daß eine als Kathode verwendete Elektrode (7) als Flächen- oder Stabelektrode ausgebildet ist und die eine oder mehreren mit Wasser elektroosmotisch transportierbaren Formen (4) an einer getrennten Stelle aus dem Erdbodenbereich (2) entfernt werden.

33. Verfahren nach Anspruch 32, dadurch gekennzeichnet, daß die getrennte Stelle eine Absaugstelle in Form eines verrohrten Brunnens ist.

34. Verfahren nach einem der vorhergehenden Ansprüche, dadurch gekennzeichnet, daß die eine oder mehreren mit Wasser elektroosmotisch transportierbaren Formen (4) gezielt zu einem eng begrenzten, vorher definierten Bereich (7) transportiert werden.

35. Verfahren nach einem der vorhergehenden Ansprüche zur Reinigung eines mit mehreren verschiedenen Schadstoffen (1) belasteten Erdenbereiches (2), dadurch gekennzeichnet,
   - daß in den belasteten Erdbodenbereich (2) für jeden der verschiedenen wasserunlöslichen Schadstoffe (1) ein Mittel (3) eingebracht wird, welches diesen Schadstoff (1) in eine mit Wasser elektroosmotisch transportierbare Form (4) überführt, und
   - daß jede mit Wasser elektroosmotisch transportierte Form (4) im Erdbodenbereich (2) zusammen mit Wasser elektroosmotisch zu einem vorher definierten Bereich (7) transportiert wird, wo sie aus dem Erdbodenbereich (2) entfernbar ist.

36. Verfahren nach Anspruch 13 und einem der Ansprüche 14 bis 35, dadurch gekennzeichnet, daß dem ausgehobenen Erdbodenbereich (2) ein oder mehrere in öliger Phase vorhandene Schadstoffe (1) und ein oder mehrere in wässriger Phase vorhandene Schadstoffe (1) entnommen werden und daß die entnommene ölige Phase von der wässrigen Phase getrennt wird, indem in einem Behälter die wässrige Phase von der öligen Phase durch ein Diaphragma elektroosmotisch getrennt wird.

37. Verfahren nach Anspruch 36, dadurch gekennzeichnet, daß ein Diaphragma aus Ton verwendet wird.

38. Verfahren nach Anspruch 37, dadurch gekennzeichnet, daß ein Diaphragma aus gebranntem Ton verwendet wird.

39. Verfahren nach Anspruch 1, dadurch gekennzeichnet, daß zur Stoff-, insbesondere zur Erdölgewinnung in den den Stoff, insbesondere das Erdöl enthaltenden Erdbodenbereich (22) das Mittel (3) eingebracht wird, das den Stoff bzw. das Erdöl in die mit Wasser transportierbare Form (4) überführt und daß an in den Erdbodenbereich (22) reichende Elektroden (23, 25) eine Spannung angelegt wird, durch die die Form (4) zu dem Bereich (7) transportiert wird.

40. Verfahren nach Anspruch 39, dadurch gekennzeichnet, daß die Elektroden in voneinander beabstandete Bohrungen (23, 24) eingebrachte Stahlrohre sind.

41. Verfahren nach Anspruch 40, dadurch gekennzeichnet, daß das den definierten Bereich (7) bildende Stahlrohr im Bereich des Erdbodenbereichs (22) ein Filterrohr (23') ist.

42. Verfahren nach einem der Ansprüche 39 bis 41, dadurch gekennzeichnet, daß als Mittel (3) wenigstens ein Tensid in wässriger Lösung in den Erdbodenbereich (22) eingebracht wird.

43. Verfahren nach Anspruch 42 und Anspruch 41, dadurch gekennzeichnet, daß das Mittel (3) unter Druck derart eingebracht wird, daß der bzw. das elektroosmotisch zu den definierten Bereich (7) bildenden Stahlrohr transportierte Stoff bzw. Erdöl im Stahlrohr (7) zur Geländeoberkante getrieben wird.

**44.** Verfahren nach Anspruch 39 bis 43, dadurch gekennzeichnet, daß als Elektroden die für die primäre und sekundäre Erdölförderung vorgesehenen Stahlrohre verwendet werden.

**45.** Verfahren nach Anspruch 2, dadurch gekennzeichnet, daß das tensidisch angereicherte Wasser elektroosmotisch durch den belasteten Erdbodenbereich unter Druck bei erhöhter Strömungsgeschwindigkeit getrieben wird.

Fig.1

Fig.3

Fig.4

Fig.2

Fig.5